# EUROPÄISCHE PATENTANMELDUNG

(11) **EP 3 053 498 A1**
(43) Veröffentlichungstag der Anmeldung: **10.08.2016**
(21) Anmeldenummer: 15153808.9
(22) Anmeldetag: 04.02.2015
(51) Int. Cl.: A47J 43/04, G05B 19/042

(54) **Küchenmaschine**

(71) Anmelder: Vorwerk & Co. Interholding GmbH, 42275 Wuppertal (DE)
(72) Erfinder: Lang, Torsten, 42657 Solingen (DE); Schomacher, Jutta, 42489 Wülfrath (DE)
(74) Vertreter: Müller, Enno

(57) **Zusammenfassung**

Die Erfindung betrifft ein Verfahren zur Zubereitung einer Speise mittels einer Küchenmaschine (1) anhand eines Rezeptes, wobei ein mobiler Datenspeicher (4) mit einer Kommunikationsschnittstelle (3) der Küchenmaschine (1) verbunden wird, um in dem mobilen Datenspeicher (4) enthaltene Daten eines Rezeptes zur Steuerung von Zubereitungsschritten an die Küchenmaschine (1) zu übermitteln. Um einem Nutzer eine komfortablere, insbesondere schnellere, Auswahl und Anzeige von Rezepten zu ermöglichen, wird vorgeschlagen, dass eine Datenverarbeitungseinrichtung (5) der Küchenmaschine (1) einen in einem Maschinendatenspeicher (2) der Küchenmaschine (1) enthaltenen ersten Datenanteil (6) des Rezeptes mit einem in dem mobilen Datenspeicher (4) enthaltenen zweiten Datenanteil (7) des Rezeptes zu einem vollständigen Datensatz (8) verbindet und anhand des vollständigen Datensatzes (8) Befehle zur Steuerung von Zubereitungsschritten der Küchenmaschine (1) erstellt. Darüber hinaus betrifft die Erfindung eine entsprechende Küchenmaschine sowie ein Küchenmaschinensystem.

## Beschreibung

Die Erfindung betrifft ein Verfahren zur Zubereitung einer Speise mittels einer Küchenmaschine anhand eines Rezeptes, wobei ein mobiler Datenspeicher mit einer Kommunikationsschnittstelle der Küchenmaschine verbunden wird, um in dem mobilen Datenspeicher enthaltene Daten eines Rezeptes zur Steuerung von Zubereitungsschritten an die Küchenmaschine zu übermitteln. Ebenso betrifft die Erfindung eine Küchenmaschine zur Durchführung des Verfahrens.

Küchenmaschinen zur Zubereitung von Speisen sind im Stand der Technik in Form von universellen elektrischen Küchenmaschinen bekannt. Diese ermöglichen neben einem mechanischen Verarbeiten von Nahrungsmitteln, zum Beispiel mittels eines Rührwerks oder Schneidmessers, häufig auch ein Garen der Nahrungsmittel mittels einer Heizeinrichtung. Zur Zubereitung einer Speise sind üblicherweise Kochrezepte vorgegeben, die mehrere aufeinanderfolgende Zubereitungsschritte aufweisen. Um einem Nutzer der Küchenmaschine das Zubereiten einer Speise nach einem Kochrezept zu ermöglichen, ist es ebenfalls bekannt, Rezeptdaten in einem Maschinendatenspeicher der Küchenmaschine oder alternativ in einem mobilen - mit der Küchenmaschine verbindbaren - Datenspeicher zu hinterlegen.

Aus der Druckschrift EP 2 801 928 A1 ist beispielsweise eine Küchenmaschine bekannt, welche nach einem in einem mobilen Datenspeicher gespeicherten Rezept zeitlich aufeinanderfolgende Zubereitungsschritte durchführt, wobei sich die Zubereitungsschritte durch verschiedenartige Verfahrensparameter, wie beispielsweise Verarbeitungstemperatur, Drehzahl eines Rührwerks oder Dauer eines Verarbeitungsschrittes unterscheiden.

Unkomfortabel ist dabei gegebenenfalls, dass der Nutzer beim Auswählen eines Rezeptes - je nach einer mehr oder weniger großen Menge von gespeicherten Daten - eine gewisse Zeitspanne aufzuwenden hat, um die angezeigten Datensätze zu selektieren und ein gewünschtes Rezept herauszusuchen. Die Suche und Anzeige von Rezepten kann insbesondere bei sehr großen gespeicherten Datenmengen langsam und somit unkomfortabel sein.

Es ist daher Aufgabe der Erfindung, ein Verfahren bzw. eine Küchenmaschine zu schaffen, welches bzw. welche dem Nutzer eine komfortablere, insbesondere schnellere, Auswahl und Anzeige von Rezepten ermöglicht.

Zur Lösung dieser Aufgabe schlägt die Erfindung zunächst ein Verfahren vor, bei welchem eine Datenverarbeitungseinrichtung der Küchenmaschine einen in einem Maschinendatenspeicher der Küchenmaschine enthaltenen ersten Datenanteil des Rezeptes mit einem in dem mobilen Datenspeicher enthaltenen zweiten Datenanteil des Rezeptes zu einem vollständigen Datensatz verbindet und anhand des vollständigen Datensatzes Befehle zur Steuerung von Zubereitungsschritten der Küchenmaschine erstellt.

Gemäß der Erfindung kann der in dem Maschinendatenspeicher der Küchenmaschine erforderliche Speicherplatz nun dadurch reduziert werden, dass der Maschinendatenspeicher der Küchenmaschine und der mobile, externe Datenspeicher, welcher mittels einer Kommunikationsschnittstelle an die Küchenmaschine angeschlossen werden kann, in der Art miteinander wechselwirken, dass diese korrespondierende Datenanteile, nämlich erste und zweite Datenanteile, aufweisen, welche sich zu einem vollständigen Datensatz kombinieren lassen. Insofern ist es möglich, in dem Maschinendatenspeicher beispielsweise nur diejenigen Datenanteile, nämlich erste Datenanteile, zu speichern, welche ein Nutzer der Küchenmaschine benötigt, um sich beispielsweise einen Überblick über verfügbare Rezepte und deren Zutaten zu verschaffen. Der Erfindung liegt somit gleichzeitig die Erkenntnis zugrunde, dass der Nutzer für bestimmte Arbeitsschritte an der Küchenmaschine - beispielsweise die Auswahl eines Rezeptes - nicht alle Datenanteile eines Rezeptes benötigt, sondern nur ganz bestimmte Informationen, welche einen ersten Datenanteil der Daten des vollständigen Datensatzes ausmachen. Durch das somit insgesamt reduzierte Datenvolumen innerhalb des Maschinendatenspeichers wird die Geschwindigkeit, mit welcher der Nutzer auf gespeicherte Daten zurückgreifen kann, erhöht. Insbesondere ist es möglich, die in dem Maschinendatenspeicher gespeicherten Datenanteile schneller zu durchsuchen und/ oder auf einem Display anzuzeigen oder auf andere Art und Weise wiedergeben zu lassen. Vorteilhaft ist dabei, dass der Maschinendatenspeicher nur diejenigen Informationen beinhaltet, welche der Nutzer der Küchenmaschine zu einem frühen Zeitpunkt der Zubereitung einer Speise benötigt, insbesondere bevor Zubereitungseinrichtungen der Küchenmaschine wie beispielsweise das Rührwerk oder eine Heizeinrichtung in Aktion treten.

Die für eine vollständige Zubereitung einer Speise benötigten weiteren Datenanteile - zweite Datenanteile - werden beispielsweise in dem mobilen, externen Datenspeicher gespeichert und stehen dem Nutzer zur Verfügung, sobald er diesen mit einer Kommunikationsschnittstelle der Küchenmaschine verbindet. Insgesamt wird somit die Speicherökonomie deutlich erhöht. Ebenso können beispielsweise Änderungen, welche lediglich den Dateninhalt der in dem mobilen Datenspeicher gespeicherten Datenanteile betreffen, besonders einfach und komfortabel aktualisiert werden, ohne dass eine Datenverbindung mit der Küchenmaschine hergestellt werden muss. Vielmehr kann der mobile Datenspeicher für eine Änderung gespeicherter Datenanteile oder eine Ergänzung neuer Datenanteile mit einem externen Rechner, beispielsweise einem Personal Computer oder einem Server (beispielsweise einer "Cloud"), verbunden werden, um eine übliche Datenspeicherung auf einem mobilen Datenspeicher wie beispielsweise einem USB-Stick oder einer Speicherkarte durchzuführen. Der Nutzer kann somit auf ihm bereits bekannte Arbeitsschritte zurückgreifen.

Es wird vorgeschlagen, dass der zweite Datenanteil vor der Verbindung mit dem ersten Datenanteil in den Maschinendatenspeicher und/oder an die Datenverarbeitungseinrichtung übertragen wird, und/oder dass der erste Datenanteil vor der Verbindung mit dem zweiten Datenanteil in den mobilen Datenspeicher und/ oder an die Datenverarbeitungseinrichtung übertragen wird.

Gemäß einer ersten Variante wird ein Datenanteil von dem mobilen Datenspeicher in den Maschinendatenspeicher übertragen, um dort den ersten Datenanteil und den zweiten Datenanteil zu einem vollständigen Datensatz (Rezept) zu verbinden. Alternativ könnte auch ein in dem Maschinendatenspeicher enthaltener Datenanteil in den mobilen Datenspeicher übertragen werden. Ebenso ist es auch möglich, eine Datenübertragung in beide Richtungen durchzuführen, das heißt es wird sowohl ein Datenanteil von dem Maschinendatenspeicher an den mobilen Datenspeicher übertragen als auch ein Datenanteil von dem mobilen Datenspeicher an den Maschinendatenspeicher. Somit steht der vollständige Datensatz entweder in dem Maschinendatenspeicher, in dem mobilen Datenspeicher oder in beiden Datenspeichern gleichzeitig zur Verfügung.

Gemäß einer zweiten Variante wird ein Datenanteil von dem mobilen Datenspeicher und/oder von dem Maschinendatenspeicher an die Datenverarbeitungseinrichtung übertragen. Somit wird der Datenanteil zuerst an die Datenverarbeitungseinrichtung der Küchenmaschine übertragen, bevor diese die Daten sodann an einen Speicherort, beispielsweise einen von dem mobilen Datenspeicher und dem Maschinendatenspeicher verschiedenen Speicherort, überträgt.

In Bezug auf die vorgenannte zweite Variante wird vorgeschlagen, dass die Datenverarbeitungseinrichtung den ersten Datenanteil und den zweiten Datenanteil zu einem Datensatz verknüpft und für eine Zeitdauer der Zubereitung der Speise kurzzeitig in einem temporären Speicher speichert. Gemäß dieser Variante erfolgt eine bloße Verknüpfung der Datenanteile der Art, dass der erste Datenanteil bzw. der zweite Datenanteil nicht in dem mobilen Datenspeicher bzw. dem Maschinendatenspeicher gespeichert werden, sondern vielmehr an einem davon unabhängigen dritten Speicherort. Der Inhalt des Maschinendatenspeichers bzw. des mobilen Datenspeichers bleibt unverändert.

Es wird vorgeschlagen, dass der erste Datenanteil einen Rezepttitel und/oder Rezeptzutaten aufweist. Der Maschinendatenspeicher der Küchenmaschine beinhaltet somit nur solche ersten Datenanteile, welche der Nutzer in einem frühen Arbeitsschritt an der Küchenmaschine benötigt. Mit Hilfe der Rezepttitel kann dem Nutzer ein Inhaltsverzeichnis der bei Kombination mit dem mobilen Datenspeicher verfügbaren Rezepte angezeigt werden. Sofern der erste Datenanteil Rezeptzutaten enthält, kann der Nutzer anhand der Zutaten entscheiden, ob er das betreffende Rezept zubereiten möchte oder nicht. Zu diesem Zeitpunkt benötigt der Nutzer üblicherweise keine weiteren Informationen über Verfahrensparameter wie beispielsweise Heiztemperatur, Drehzahl und so weiter, so dass diese nicht in dem Maschinendatenspeicher der Küchenmaschine verfügbar sein müssen.

Darüber hinaus ist es vorgesehen, dass der zweite Datenanteil eine programmatische Anweisung zur Zubereitung der Speise aufweist. Der zweite Datenanteil, welcher in dem mobilen Datenspeicher gespeichert ist, enthält somit diejenigen Informationen, welche zur Zubereitung der Speise erforderlich sind, wie beispielsweise die Verfahrensparameter Temperatur, Drehzahl, Zeitdauer einer Erhitzung, Zeitdauer einer Rühreinwirkung und so weiter. Die programmatische Anweisung gibt somit die konkreten Einzelheiten des Rezeptes an, um die aufeinanderfolgenden Zubereitungsschritte durchführen zu können.

Neben dem vorgenannten Verfahren wird darüber hinaus eine Küchenmaschine zur Zubereitung einer Speise anhand eines Rezeptes vorgeschlagen, wobei die Küchenmaschine einen Maschinendatenspeicher, eine Kommunikationsschnittstelle zur Verbindung mit mindestens einem mobilen Datenspeicher und eine Datenverarbeitungseinrichtung aufweist, wobei die Datenverarbeitungseinrichtung ausgebildet ist, in einem Rezept enthaltene Daten in Befehle zur Steuerung von Zubereitungsschritten der Küchenmaschine zu wandeln, wobei die Datenverarbeitungseinrichtung ausgebildet ist, einen in dem Maschinendatenspeicher gespeicherten ersten Datenanteil des Rezeptes mit einem in dem mobilen Datenspeicher gespeicherten zweiten Datenanteil des Rezeptes zu einem vollständigen Datensatz des Rezeptes zu verbinden.

Es wird vorgeschlagen, dass die Kommunikationsschnittstelle zur Datenübertragung von Datenanteilen zwischen dem mobilen Datenspeicher und dem stationären Datenspeicher und/oder dem mobilen Datenspeicher und der Datenverarbeitungseinrichtung ausgebildet ist.

Es wird auch vorgeschlagen, dass die Küchenmaschine eine optische Ausgabeeinrichtung aufweist, welche die Befehle zur Steuerung von Zubereitungsschritten anzeigt. Die optische Ausgabeeinrichtung kann ein Display sein, welche die Befehle zur Steuerung der Zubereitungsschritte anzeigt, die die Datenverarbeitungseinrichtung aus dem vollständigen Datensatz des Rezeptes entnommen hat. Der Nutzer der Küchenmaschine kann daraufhin die Zubereitungsschritte manuell starten. Beispielsweise kann der Befehl "10 Minuten bei 100°C kochen" angezeigt werden, woraufhin der Nutzer eine entsprechende Zeitdauer und Heiztemperatur an der Küchenmaschine einstellt. Die optische Ausgabeeinrichtung kann dieselbe Ausgabeeinrichtung sein, welche dem Nutzer beispielsweise auch die in dem Maschinendatenspeicher der Küchenmaschine gespeicherten ersten Datenanteile anzeigt, beispielsweise ein Inhaltsverzeichnis mit Rezepttiteln.

Des Weiteren kann die Küchenmaschine eine Steuereinrichtung aufweisen, welche ausgebildet ist, eine Zubereitungseinrichtung, insbesondere eine Heizeinrichtung und/oder ein Rührwerk, der Küchenmaschine in Abhängigkeit von den Befehlen zur Steuerung von Zubereitungsschritten automatisch oder halbautomatisch zu steuern. Gemäß dieser Ausführung kann alternativ oder zusätzlich zu einer optischen Anzeige der Befehle zur Steuerung von Zubereitungsschritten eine automatische oder halbautomatische Steuerung von Zubereitungseinrichtungen der Küchenmaschine durchgeführt werden. Die Datenverarbeitungseinrichtung verbindet den ersten Datenanteil und den zweiten Datenanteil zu einem vollständigen Datensatz des Rezeptes, wandelt die in dem Rezept enthaltenen Daten in Befehle zur Steuerung von Zubereitungsschritten der Küchenmaschine und steuert anschließend die Zubereitungseinrichtungen der Küchenmaschine, beispielsweise eine Heizeinrichtung und/oder ein Rührwerk oder dergleichen, automatisch oder halbautomatisch. Bei der halbautomatischen Steuerung erhält der Nutzer zusätzlich Befehle mittels der optischen Ausgabeeinrichtung angezeigt und hat zur tatsächlichen Veranlassung des Zubereitungsschrittes eine Bestätigung zu erteilen. Beispielsweise wird dem Nutzer auf der optischen Ausgabeeinrichtung der Befehl "Rührwerk starten, Drehzahl 1.000 U/Min" angezeigt, wobei der Nutzer zum tatsächlichen Start des Zubereitungsschrittes eine Bestätigungstaste oder einen sonstigen Eingabebefehl zu tätigen hat.

Es wird vorgeschlagen, dass der Datenverarbeitungseinrichtung ein temporärer Speicher zugeordnet ist, wobei die Datenverarbeitungseinrichtung ausgebildet ist, den ersten Datenanteil und den zweiten Datenanteil zu einem Datensatz zu verknüpfen und den verknüpften Datensatz in dem temporären Speicher für die Zeitdauer der Zubereitung der Speise kurzzeitig zu speichern. Dabei findet kein gegenseitiger Datenaustausch zwischen dem Maschinendatenspeicher und dem mobilen Datenspeicher statt. Vielmehr werden der erste Datenanteil des Maschinendatenspeichers und der zweite Datenanteil des mobilen Datenspeichers innerhalb eines dritten Datenspeichers, nämlich einem temporären Speicher, gespeichert. Der temporäre Speicher kann beispielsweise ein virtueller Speicher oder auch eine temporäre Datei sein. Innerhalb des temporären Speichers werden die beiden Datenanteile zu einem Datensatz verknüpft und für die Zeitdauer der Zubereitung der Speise hinterlegt, so dass dieser der Datenverarbeitungseinrichtung und/ oder einer Steuereinrichtung für die Zubereitung der Speisen zur Verfügung steht. Nach abgeschlossener Zubereitung der Speise werden die Datenanteile wieder aus dem temporären Speicher gelöst und/ oder durch neue Datensätze überschrieben. Die in dem Maschinendatenspeicher bzw. dem mobilen Datenspeicher enthaltenen Datenanteile bleiben unverändert. Insofern wird die erfindungsgemäße Speicherökonomie beibehalten, wobei der Maschinendatenspeicher nur diejenigen Datenanteile enthält, welche der Nutzer zur Auswahl eines Rezeptes benötigt. Die detaillierten Datenanteile, welche konkrete programmatische Anweisungen zur Zubereitung der Speise enthalten, sind stattdessen in dem mobilen Datenspeicher hinterlegt.

Alternativ kann vorgesehen sein, dass die Datenverarbeitungseinrichtung ausgebildet ist, den ersten Datenanteil in den mobilen Datenspeicher zu kopieren und/oder den zweiten Datenanteil in den Maschinendatenspeicher zu kopieren und dort zu einem vollständigen Datensatz des Rezeptes zu verbinden. Bei dieser Alternative findet ein - gegebenenfalls wechselseitiger - Datenaustausch zwischen dem Maschinendatenspeicher und dem mobilen Datenspeicher statt. Sofern der Nutzer ein bestimmtes Rezept zur Zubereitung ausgewählt hat, wird der in dem mobilen Datenspeicher enthaltene zweite Datenanteil, welcher beispielsweise die programmatische Anweisung zur Zubereitung der Speise und Steuerung der Zubereitungseinrichtung enthält, in den Maschinendatenspeicher kopiert und dort zu einem vollständigen Datensatz verbunden. Nach erfolgter Zubereitung kann der zweite Datenanteil entweder wieder aus dem Maschinendatenspeicher gelöscht werden oder dort verbleiben, um in dem Fall, dass der Nutzer das Rezept später ein zweites Mal kochen möchte, bereits vollständig zur Verfügung steht. Ebenso ist es selbstverständlich auch möglich, dass der erste Datenanteil des Maschinendatenspeichers in den mobilen Datenspeicher kopiert wird und mit dem zweiten Datenanteil zu einem vollständigen Datensatz des Rezeptes verbunden wird. Bei dem Kopieren des ersten Datenanteils in den mobilen Datenspeicher bzw. des zweiten Datenanteils in den Maschinendatenspeicher können der Maschinendatenspeicher und der mobile Datenspeicher ausgebildet sein, direkt miteinander zu kommunizieren. Alternativ kann der kopierte Datenanteil auch zuerst an die Datenverarbeitungseinrichtung übermittelt werden, welche den Datenanteil sodann an den anderen Datenspeicher übermittelt. Sobald der erste Datenanteil und der zweite Datenanteil innerhalb des Maschinendatenspeichers und/ oder des mobilen Datenspeichers miteinander zu einem vollständigen Datensatz des Rezeptes verbunden sind, kann dieser vollständige Datensatz wieder an die Datenverarbeitungseinrichtung übermittelt werden, damit diese die in dem Rezept enthaltenen Daten in Befehle zur Steuerung von Zubereitungsschritten der Küchenmaschine umsetzen kann.

Die Datenverbindung zwischen dem Maschinendatenspeicher und dem mobilen Datenspeicher bzw. dem mobilen Datenspeicher und der Datenverarbeitungseinrichtung mittels der Kommunikationsschnittstelle der Küchenmaschine kann verschlüsselt sein, um einen Zugriff Dritter auf die Daten zu verhindern. Darüber hinaus kann eine Kompatibilitätsprüfung vorgesehen sein, welche vor einer Verbindung des mobilen Datenspeichers mit dem Maschinendatenspeicher bzw. der Datenverarbeitungseinrichtung prüft, ob der mobile Datenspeicher kompatibel zu dem Maschinendatenspeicher ist. Sollte die Kompatibilitätsprüfung ergeben, dass der Maschinendatenspeicher und der mobile Datenspeicher nicht zueinander kompatibel sind, kann dem Nutzer der Küchenmaschine eine Warnung auf der optischen Ausgabeeinrichtung der Küchenmaschine angezeigt werden. Alternativ sind auch Warntöne oder ähnliches denkbar.

Neben der zuvor erläuterten erfindungsgemäßen Küchenmaschine wird ebenfalls ein Küchenmaschinensystem vorgeschlagen, welches eine einen Maschinendatenspeicher aufweisende Küchenmaschine zur Zubereitung einer Speise anhand eines Rezeptes und mindestens einen zum Datenverkehr mit der Küchenmaschine verbindbaren mobilen Datenspeicher, insbesondere einen USB-Stick oder eine Speicherkarte, aufweist, wobei die Küchenmaschine eine Datenverarbeitungseinrichtung aufweist, welche ausgebildet ist, die in dem Rezept enthaltenen Daten in Befehle zur Steuerung von Zubereitungsschritten der Küchenmaschine zu wandeln. Es wird vorgeschlagen, dass der Maschinendatenspeicher einen ersten Datenanteil von in dem Rezept enthaltenen Daten aufweist und dass der mobile Datenspeicher einen zweiten Datenanteil von in dem Rezept enthaltenen Daten aufweist, wobei die Datenverarbeitungseinrichtung ausgebildet ist, den ersten Datenanteil und den zweiten Datenanteil zu einem vollständigen Datensatz des Rezeptes zu verbinden. Die Komponenten des Küchenmaschinensystems, d.h. der Maschinendatenspeicher und der mobile Datenspeicher arbeiten dabei erfindungsgemäß so zusammen, wie es in Bezug auf die Küchenmaschine zuvor erläutert wurde. Die Küchenmaschine ist nach einem oder mehreren der zuvor erläuterten Merkmale ausgebildet, so dass insgesamt eine optimale Speicherökonomie zwischen den beiden Datenspeichern gewahrt ist und der Nutzer eine Suche und/oder Anzeige von verfügbaren Rezepten besonders schnell durchführen kann.

Schließlich kann vorgesehen sein, dass der mobile Datenspeicher eine größere Speicherkapazität aufweist als der Maschinendatenspeicher der Küchenmaschine. Da erfindungsgemäß in dem mobilen Datenspeicher die umfangreichen programmatischen Anweisungen zur Zubereitung einer Speise gespeichert sind, wird eine entsprechend größere Speicherkapazität benötigt als für den Maschinendatenspeicher, welcher beispielsweise lediglich Rezepttitel und/oder Rezeptzutaten der Rezepte enthalten muss, um dem Nutzer eine Auswahl zur Verfügung stehender Rezepte im Sinne eines Inhaltsverzeichnisses zur Verfügung stellen zu können. Durch die geringe Speicherkapazität des Maschinendatenspeichers kann eine Suche innerhalb der gespeicherten ersten Datenanteile besonders schnell erfolgen, so dass der Nutzer komfortabel bei der Auswahl eines Rezeptes unterstützt wird.

Im Folgenden wird die Erfindung anhand von Ausführungsbeispielen näher erläutert. Es zeigen:

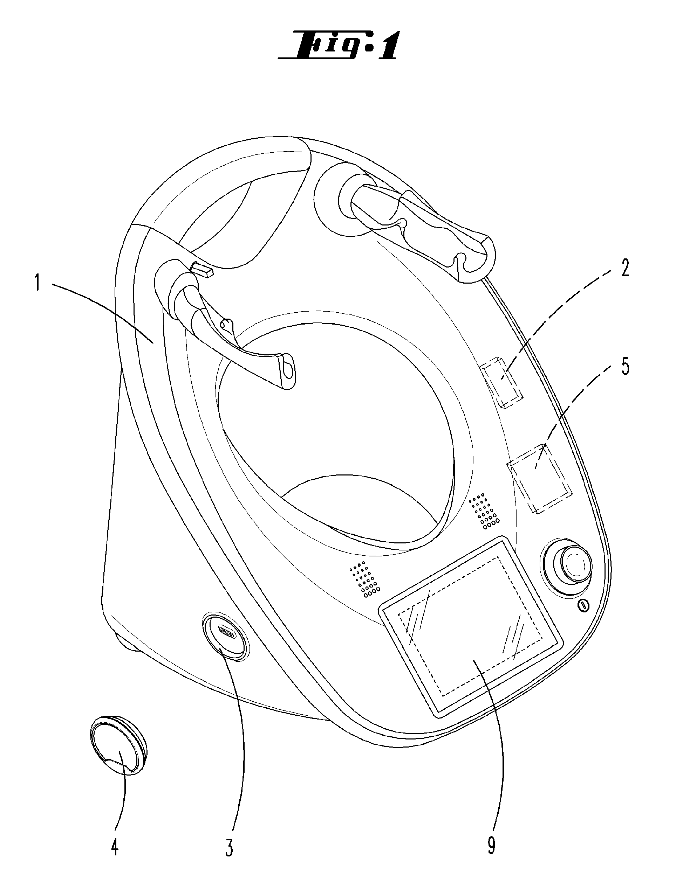

- Fig. 1:: Eine erfindungsgemäße Küchenmaschine in einer perspektivischen Ansicht
- Fig. 2:: Ein Schema des Zusammenwirkens eines Maschinendatenspeichers und eines mobilen Datenspeichers durch Verknüpfung von Datenanteilen in einem temporären Speicher,
- Fig. 3:: Ein Schema des Zusammenwirkens eines Maschinendatenspeichers und eines mobilen Datenspeichers durch Kopieren eines Datenanteils des mobilen Datenspeichers in den Maschinendatenspeicher.

Die gezeigte Küchenmaschine 1 ist ein übliches Koch-Mix-Gerät, welches zur Zubereitung einer Speise anhand eines Rezeptes verwendet werden kann. Die Küchenmaschine 1 weist mehrere Zubereitungseinrichtungen 11 auf, beispielsweise ein Rührwerk und eine Heizeinrichtung. Die Küchenmaschine 1 weist darüber hinaus ein Rührgefäß 13 auf, in welches Zutaten zur Zubereitung einer Speise eingebracht werden können. Innerhalb der Küchenmaschine 1 ist ein Maschinendatenspeicher 2 angeordnet sowie eine Datenverarbeitungseinrichtung 5 und eine Steuereinrichtung 10 zur Steuerung der Zubereitungseinrichtungen 11. Darüber hinaus weist die Küchenmaschine 1 eine Ausgabeeinrichtung 9, hier ein Display, auf, welche dem Nutzer zur Anzeige von Informationen dient. Die Küchenmaschine 1 weist zudem eine Kommunikationsschnittstelle 3 auf, welche mit mindestens einem mobilen Datenspeicher 4 verbunden werden kann. Der mobile Datenspeicher 4 ist hier beispielsweise ein USB-Stick.

Der Maschinendatenspeicher 2 der Küchenmaschine 1 weist mehrere erste Datenanteile 6 auf, wobei jeder erste Datenanteil 6 einem bestimmten Rezept zugeordnet ist. Der mobile Datenspeicher 4 bzw. die mobilen Datenspeicher 4 (in dem Fall, dass mehrere mobile Datenspeicher 4 mit der Küchenmaschine 1 verbindbar sind), weist mehrere zweite Datenanteile 7 auf, welche mit den ersten Datenanteilen 6 zu vollständigen Datensätzen 8 der Rezepte verbunden werden können. Bei den ersten Datenanteilen 6 handelt es sich beispielsweise um Rezepttitel und/oder Rezeptzutaten, welche dem Nutzer vor Beginn der Zubereitung der Speise, d.h. vor Betätigung einer Zubereitungseinrichtung 11, zur Auswahl eines Rezeptes dienen. Dabei können die Rezepttitel mehrerer erster Datenanteile in der Art eines Inhaltsverzeichnisses organisiert werden, welche dem Nutzer eine einfache und schnelle Auswahl ermöglichen. Ggf. können die Rezepttitel durch eine Angabe der jeweiligen erforderlichen Rezeptzutaten ergänzt werden, so dass der Nutzer einen Überblick darüber erhält, ob er für die Zubereitung erforderliche Zutaten verfügbar hat. Die zweiten Datenanteile 7 enthalten - korrespondierend zu den ersten Datenanteilen 6 - programmatische Anweisungen zur Zubereitung der Speise für das jeweilige Rezept. Diese programmatischen Anweisungen dienen zur Steuerung der Zubereitungseinrichtungen 11 der Küchenmaschine 1 mittels der Steuereinrichtung 10.

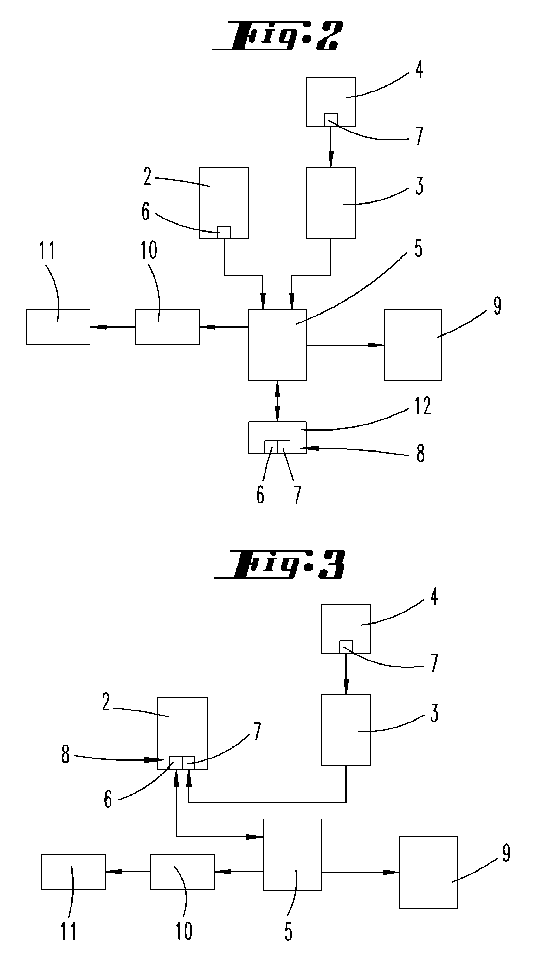

Im Folgenden werden zwei alternative Ausführungsvarianten näher erläutert. Dabei zeigt Fig. 2 eine erste Variante, bei welcher der erste Datenanteil 6 und der zweite Datenanteil 7 eines Rezeptes derart miteinander verknüpft werden, dass der kombinierte vollständige Datensatz 8 nur in einem temporären Speicher 12 hinterlegt wird. Die Variante gemäß Fig. 3 zeigt dagegen eine Verbindung des ersten Datenanteils 6 und des zweiten Datenanteils 7 derart, dass der zweite Datenanteil 7 aus dem mobilen Datenspeicher 4 in den Maschinendatenspeicher 2 der Küchenmaschine 1 kopiert wird, so dass der vollständige Datensatz 8 in dem Maschinendatenspeicher 2 zur Verfügung steht.

Fig. 2 zeigt im Detail, dass der Maschinendatenspeicher 2 der Küchenmaschine 1 einen ersten Datenanteil 6 enthält, hier einen Rezepttitel und eine Angabe der für das Rezept benötigten Zutaten. Der mobile Datenspeicher 4, nämlich der USB-Stick, enthält einen zweiten Datenanteil 7 mit programmatischen Anweisungen zur Zubereitung der Speise gemäß Rezept. Der mobile Datenspeicher 4 ist an die Kommunikationsschnittstelle 3 der Küchenmaschine 1 angeschlossen und steht darüber in Datenverbindung mit der Datenverarbeitungseinrichtung 5, welche ebenso in Datenverbindung mit dem Maschinendatenspeicher 2 steht. Die Datenverarbeitungseinrichtung 5 liest den ersten Datenanteil 6 und den zweiten Datenanteil 7 aus dem Maschinendatenspeicher 2 bzw. dem mobilen Datenspeicher 4 aus und übermittelt diese an einen temporären Speicher 12, hier beispielsweise ein virtueller Speicher, welcher den ersten Datenanteil 6 und den zweiten Datenanteil 7 kombiniert zu einem vollständigen Datensatz 8 enthält. Die Datenverarbeitungseinrichtung 5 greift auf diesen vollständigen Datensatz 8 zu, um die darin enthaltenen Daten in Befehle zur Steuerung von Zubereitungsschritten der Küchenmaschine zu wandeln. Diese Befehle zur Steuerung von Zubereitungsschritten übermittelt die Datenverarbeitungseinrichtung 5 an die Steuereinrichtung 10, welche daraufhin eine Zubereitungseinrichtung 11, hier beispielsweise eine Heizeinrichtung, startet und in Abhängigkeit von dem Inhalt des Befehls beispielsweise über einen bestimmten Zeitraum betreibt. Die Steuereinrichtung 10 steuert die Zubereitungseinrichtung 11 halbautomatisch in Abhängigkeit von den Befehlen der Datenverarbeitungseinrichtung 5. Dabei werden dem Nutzer der Küchenmaschine 1 gleichzeitig aktuelle Befehle mittels der Ausgabeeinrichtung 9, hier einem Display, angezeigt, woraufhin der Nutzer den angezeigten Befehl bestätigen muss, um die Ausführung des Befehls, d.h. die Steuerung der Zubereitungseinrichtung 11, zu veranlassen.

Fig. 3 zeigt detailliert eine zweite Ausführungsvariante der Erfindung, bei welcher der Maschinendatenspeicher 2 wie zuvor erläutert ebenfalls einen ersten Datenanteil 6 aufweist und der mobile Datenspeicher 4 ebenso einen zweiten Datenanteil 7 aufweist. Entgegen der Ausführungsvariante gemäß Fig. 2 wird der zweite Datenanteil 7 hier mittels der Kommunikationsschnittstelle 3 in den Maschinendatenspeicher 2 der Küchenmaschine 1 kopiert, so dass der Maschinendatenspeicher 2 sowohl den ersten Datenanteil 6 als auch den zweiten Datenanteil 7 enthält und somit ein vollständiger Datensatz 8 innerhalb des Maschinendatenspeichers 2 zur Verfügung steht. Die Datenverarbeitungseinrichtung 5 greift auf diesen vollständigen Datensatz 8 innerhalb des Maschinendatenspeichers 2 zu und wandelt diesen wiederum in Befehle zur Steuerung von Zubereitungseinrichtungen 11 der Küchenmaschine 1, wobei die Datenverarbeitungseinrichtung 5 die Befehle zur Steuerung von Zubereitungsschritten zum einen optisch mittels der Ausgabeeinrichtung 9 für den Nutzer ausgibt und zum anderen an die Steuereinrichtung 10 weiterleitet, um eine entsprechende Steuerung der Zubereitungseinrichtung 11 durchzuführen. Die mittels der Ausgabeeinrichtung 9 angezeigte Information kann ausschließlich der Information des Nutzers dienen, ohne dass dieser einen Befehl zur Steuerung zu bestätigen hat. Entsprechend kann vorgesehen sein, dass die Datenverarbeitungseinrichtung 5 einen Befehl automatisch an die Steuereinrichtung 10 weitergibt, welche daraufhin automatisch eine Steuerung der Zubereitungseinrichtung 11 veranlasst. Bei dieser vollautomatischen Steuerung der Zubereitungseinrichtung 11 hat der Nutzer der Küchenmaschine 1 dafür Sorge zu tragen, dass er rechtzeitig entsprechende Zutaten in das Rührgefäß 13 der Küchenmaschine 1 einfüllt. Den aktuellen Status der Zubereitung der Küchenmaschine 1, d.h. den nächsten anstehenden Zubereitungsschritt, kann er dabei der mittels der Ausgabeeinrichtung 9 angezeigten Information entnehmen.

### Bezugszeichenliste

1. Küchenmaschine
2. Maschinendatenspeicher
3. Kommunikationsschnittstelle
4. Mobiler Datenspeicher
5. Datenverarbeitungseinrichtung
6. Erster Datenanteil
7. Zweiter Datenanteil
8. Datensatz
9. Ausgabeeinrichtung
10. Steuereinrichtung
11. Zubereitungseinrichtung
12. Temporärer Speicher
13. Rührgefäß

## Patentansprüche

1. Verfahren zur Zubereitung einer Speise mittels einer Küchenmaschine (1) anhand eines Rezeptes, wobei ein mobiler Datenspeicher (4) mit einer Kommunikationsschnittstelle (3) der Küchenmaschine (1) verbunden wird, um in dem mobilen Datenspeicher (4) enthaltene Daten eines Rezeptes zur Steuerung von Zubereitungsschritten an die Küchenmaschine (1) zu übermitteln, **dadurch gekennzeichnet, dass** eine Datenverarbeitungseinrichtung (5) der Küchenmaschine (1) einen in einem Maschinendatenspeicher (2) der Küchenmaschine (1) enthaltenen ersten Datenanteil (6) des Rezeptes mit einem in dem mobilen Datenspeicher (4) enthaltenen zweiten Datenanteil (7) des Rezeptes zu einem vollständigen Datensatz (8) verbindet und anhand des vollständigen Datensatzes (8) Befehle zur Steuerung von Zubereitungsschritten der Küchenmaschine (1) erstellt.

2. Verfahren nach Anspruch 1, **dadurch gekennzeichnet, dass** der zweite Datenanteil (7) vor der Verbindung mit dem ersten Datenanteil (6) in den Maschinendatenspeicher (2) und/oder an die Datenverarbeitungseinrichtung (5) übertragen wird, und/oder dass der erste Datenanteil (6) vor der Verbindung mit dem zweiten Datenanteil (7) in den mobilen Datenspeicher (4) und/oder an die Datenverarbeitungseinrichtung (5) übertragen wird.

3. Verfahren nach Anspruch 1 oder 2, **dadurch gekennzeichnet, dass** die Datenverarbeitungseinrichtung (5) den ersten Datenanteil (6) und den zweiten Datenanteil (7) zu einem Datensatz (8) verknüpft und für eine Zeitdauer der Zubereitung der Speise kurzzeitig in einem temporären Speicher (12) speichert.

4. Verfahren nach Anspruch 1 oder 2, **dadurch gekennzeichnet, dass** die Datenverarbeitungseinrichtung (5) den ersten Datenanteil (6) in den mobilen Datenspeicher (4) kopiert und/oder den zweiten Datenanteil (7) in den Maschinendatenspeicher (2) kopiert und dort zu einem vollständigen Datensatz (8) verbindet.

5. Küchenmaschine (1) zur Zubereitung einer Speise anhand eines Rezeptes, wobei die Küchenmaschine (1) einen Maschinendatenspeicher (2), eine Kommunikationsschnittstelle (3) zur Verbindung mit mindestens einem mobilen Datenspeicher (4) und eine Datenverarbeitungseinrichtung (5) aufweist, wobei die Datenverarbeitungseinrichtung (5) ausgebildet ist, in einem Rezept enthaltene Daten in Befehle zur Steuerung von Zubereitungsschritten der Küchenmaschine (1) zu wandeln, **dadurch gekennzeichnet, dass** die Datenverarbeitungseinrichtung (5) ausgebildet ist, einen in dem Maschinendatenspeicher (2) gespeicherten ersten Datenanteil (6) des Rezeptes mit einem in dem mobilen Datenspeicher (4) gespeicherten zweiten Datenanteil (7) des Rezeptes zu einem vollständigen Datensatz (8) des Rezeptes zu verbinden.

6. Küchenmaschine (1) nach Anspruch 5, **dadurch gekennzeichnet, dass** die Kommunikationsschnittstelle (3) zur Datenübertragung von Datenanteilen (6, 7) zwischen dem mobilen Datenspeicher (4) und dem Maschinendatenspeicher (2) und/ oder dem mobilen Datenspeicher (4) und der Datenverarbeitungseinrichtung (5) ausgebildet ist.

7. Küchenmaschine (1) nach Anspruch 5 oder 6, **gekennzeichnet durch** eine optische Ausgabeeinrichtung (9), welche die Befehle zur Steuerung von Zubereitungsschritten anzeigt.

8. Küchenmaschine (1) nach einem der Ansprüche 5 bis 7, **gekennzeichnet durch** eine Steuereinrichtung (10), welche ausgebildet ist, eine Zubereitungseinrichtung (11), insbesondere eine Heizeinrichtung und/oder ein Rührwerk, der Küchenmaschine (1) in Abhängigkeit von den Befehlen zur Steuerung von Zubereitungsschritten automatisch oder halbautomatisch zu steuern.

9. Küchenmaschinensystem mit einer einen Maschinendatenspeicher (2) aufweisenden Küchenmaschine (1), insbesondere Küchenmaschine (1) nach einem der vorhergehenden Ansprüche, zur Zubereitung einer Speise anhand eines Rezeptes und mit mindestens einem zum Datenverkehr mit der Küchenmaschine (1) verbindbaren mobilen Datenspeicher (4), insbesondere einem USB-Stick oder einer Speicherkarte, wobei die Küchenmaschine (1) eine Datenverarbeitungseinrichtung (5) aufweist, welche ausgebildet ist, die in dem Rezept enthaltenen Daten in Befehle zur Steuerung von Zubereitungsschritten der Küchenmaschine (1) zu wandeln, **dadurch gekennzeichnet, dass** der Maschinendatenspeicher (2) einen ersten Datenanteil (6) von in dem Rezept enthaltenen Daten aufweist und dass der mobile Datenspeicher (4) einen zweiten Datenanteil (7) von in dem Rezept enthaltenen Daten aufweist, wobei die Datenverarbeitungseinrichtung (5) ausgebildet ist, den ersten Datenanteil (6) und den zweiten Datenanteil (7) zu einem vollständigen Datensatz (8) des Rezeptes zu verbinden.

10. Küchenmaschinensystem nach Anspruch 9, **dadurch gekennzeichnet, dass** der mobile Datenspeicher (4) eine größere Speicherkapazität aufweist als der Maschinendatenspeicher (2) der Küchenmaschine (1).
